# EUROPEAN PATENT APPLICATION

(11) **EP 3 016 462 A1**
(43) Date of publication of application: **04.05.2016**
(21) Application number: 14818726.3
(22) Date of filing: 27.06.2014
(51) Int. Cl.: H04W 72/04, H04W 16/32, H04W 92/20

(54) **MOBILE COMMUNICATION SYSTEM AND MOBILE COMMUNICATION METHOD**

(30) Priority: 28.06.2013 JP 2013135848
(71) Applicant: NTT Docomo, Inc., Tokyo 100-6150 (JP)
(72) Inventor: HAPSARI, Wuri Andarmawanti, Tokyo 100-6150 (JP); UCHINO, Tooru, Tokyo 100-6150 (JP); TAKAHASHI, Hideaki, Tokyo 100-6150 (JP)
(74) Representative: Hoffmann Eitle
(86) International application number: PCT/JP2014/067104
(87) International publication number: WO 2014/208711

(57) **Abstract**

Roles of a radio base station eNB31 managing a macro cell and eNB#10 managing a small cell in allocating resource to a mobile station UE in the small cell under execution of "Inter-eNB CA" using both the radio base stations eNB#1 and eNB#10 are appropriately prescribed. In a mobile communication system according to the present invention, the radio base station eNB#1 allocates resource to the mobile station UE in the small cell based on information on the resource in the small cell, generates an RRC message including the result of resource allocation, transmits the RRC message to the mobile station UE, and notifies the result of resource allocation to the radio base station eNB#10. The radio base station eNB#10 performs setting of a PDCP layer function unit and so on for U-plane based on the result of resource allocation.

## Description

### TECHNICAL FIELD

The present invention relates to a mobile communication system.

### BACKGROUND ART

"Small Cell Enhancement (SCE work item)" is being discussed in Rel-12 of LTE (Long Term Evolution).

"Small Cell Enhancement (SCE)" is intended for throughput improvement and "mobility robustness".

Here, for achieving the throughput improvement, a mobile station UE is capable of transmitting and receiving U-plane data by aggregating resources of multiple (a plurality of) radio base stations eNB in "Small Cell Enhancement (SCE) ". In "Small Cell Enhancement (SCE)", not only "Intra eNB CA (Carrier Aggregation) but also "Inter eNB CA (Inter eNB Aggregation)" can be implemented.

Radio base stations eNB configured to manage macro cells ensures the mobility of a mobile station UE. Thus, even if numerous small cells are installed, handover between small cells does not have to be performed, and the quality is ensured by handover between macro cells. As a result, "mobility robustness" is achieved. The small cell is also referred to as a "phantom cell".

### PRIOR ART DOCUMENT

### NON-PATENT DOCUMENT

Non-patent document 1: 3GPP TS36.932

### SUMMARY OF THE INVENTION

However, in the C-plane architecture of the "Small Cell Enhancement (SCE)" specified thus far, there is a problem in that a method of transmitting an RRC message to a mobile station UE and a method of allocating resource to a mobile station UE in a small cell have not been considered so far.

In view of the foregoing problem, the present invention provides a mobile communication system in which the roles of a radio base station eNB managing a macro cell and a radio base station eNB managing a small cell in allocating resource to a mobile station UE in the small cell under execution of "Inter-eNB CA" using the two radio base stations eNB are appropriately prescribed.

A first feature of the present invention is summarized as a mobile communication system including: a first radio base station configured to manage a macro cell; and a second radio base station configured to manage a small cell, in which the first radio base station is configured to acquire information on resource in the small cell from the second radio base station, the first radio base station is configured to allocate resource to a mobile station in the small cell based on the information on the resource, the first radio base station is configured to generate an RRC message including a result of resource allocation to the mobile station in the small cell, and to transmit the RRC message to the mobile station, an X2'-AP function unit of the first radio base station is configured to notify the result of resource allocation to an X2' -AP function unit of the second radio base station, and the second radio base station is configured to perform setting of a PDCP layer function unit, an RLC layer function unit, and a MAC layer function unit for U-plane based on the result of resource allocation.

A second feature of the present invention is summarized as a mobile communication system including: a first radio base station configured to manage a macro cell; and a second radio base station configured to manage a small cell, in which the second radio base station is configured to allocate resource to a mobile station in the small cell, an RRC layer function unit of the second radio base station is configured to perform setting of a PDCP layer function unit, an RLC layer function unit, and a MAC layer function unit for U-plane based on a result of resource allocation to the mobile station UE in the small cell under control, the second radio base station is configured to generate an RRC message including the result of resource allocation, an X2'-AP function unit of the second radio base station is configured to notify the RRC message to an X2'-AP function unit of the first radio base station, and the first radio base station is configured to notify the RRC message to the mobile station.

A third feature of the present invention is summarized as a mobile communication system including: a first radio base station configured to manage a macro cell; and a second radio base station configured to manage a small cell, in which the second radio base station is configured to allocate resource to a mobile station in the small cell, an RRC layer function unit of the second radio base station is configured to perform setting of a PDCP layer function unit, an RLC layer function unit, and a MAC layer function unit for U-plane based on a result of resource allocation to the mobile station in the small cell, the second radio base station is configured to generate an RRC message including the result of resource allocation, and the second radio base station is configured to notify the RRC message to the mobile station.

A fourth feature of the present invention is summarized as a mobile communication system including: a first radio base station configured to manage a macro cell; and a second radio base station configured to manage a small cell, in which the second radio base station is configured to allocate resource to a mobile station in the small cell, an RRC layer function unit of the second radio base station is configured to perform setting of a PDCP layer function unit, an RLC layer function unit, and a MAC layer function unit for U-plane based on a result of resource allocation to the mobile station in the small cell, the second radio base station is configured to generate an RRC message including the result of resource allocation, and the second radio base station configured to determine, based on a radio link condition or preset configuration, whether to transmit the RRC message directly to the mobile station without through the first radio base station or transmit the RRC message to the mobile station via the first radio base station.

A fifth feature of the present invention is summarized as a mobile communication method implemented by a mobile communication system, the mobile communication system including a first radio base station configured to manage a macro cell, and a second radio base station configured to manage a small cell, the method including: acquiring, by the first radio base station, information on resource in the small cell from the second radio base station, allocating resource to a mobile station in the small cell based on the information on the resource, generating an RRC message including a result of resource allocation to the mobile station in the small cell, transmitting the RRC message to the mobile station, and notifying the result of resource allocation to the second radio base station; and performing, by the second radio base station, setting of a PDCP layer function unit, an RLC layer function unit, and a MAC layer function unit for U-plane based on the result of resource allocation.

### BRIEF DESCRIPTION OF THE DRAWINGS

[Fig. 1] Fig. 1 is an overall configuration diagram of a mobile communication system according to a first embodiment of the present invention;
[Fig. 2] Fig. 2 is a protocol stack diagram of devices constituting the mobile communication system according to the first embodiment of the present invention;
[Fig. 3] Fig. 3 is a sequence diagram illustrating the operation of the mobile communication system according to the first embodiment of the present invention;
[Fig. 4] Fig. 4 is an overall configuration diagram of a mobile communication system according to a second embodiment of the present invention;
[Fig. 5] Fig. 5 is a protocol stack diagram of devices constituting the mobile communication system according to the second embodiment of the present invention;
[Fig. 6] Fig. 6 is a sequence diagram illustrating the operation of the mobile communication system according to the second embodiment of the present invention;
[Fig. 7] Fig. 7 is an overall configuration diagram of a mobile communication system according to a third embodiment of the present invention;
[Fig. 8] Fig. 8 is a protocol stack diagram of devices constituting the mobile communication system according to the third embodiment of the present invention; and
[Fig. 9] Fig. 9 is a sequence diagram illustrating the operation of the mobile communication system according to the third embodiment of the present invention.

### MODE FOR CARRYING OUT THE INVENTION

### (Mobile communication system according to a first embodiment of the present invention)

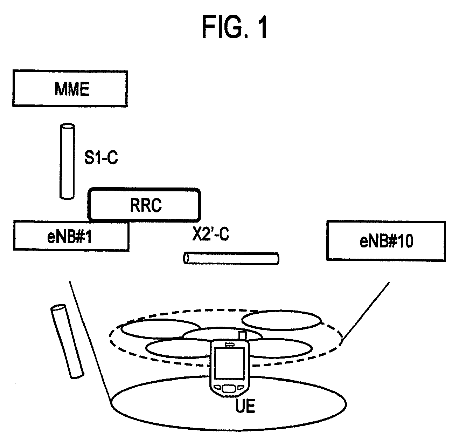

A mobile communication system according to the first embodiment of the present invention is described with reference to Figs. 1 to 3. The mobile communication system according to this embodiment is described by illustrating a mobile communication system of the LTE scheme. However, the present invention also may be applied to a mobile communication system of a scheme other than the LTE scheme.

As illustrated in Fig. 1, the mobile communication system according to this embodiment includes a mobility management node MME, a radio base station eNB#1 managing a macro cell, and a radio base station eNB#10 managing a small cell.

As illustrated in Fig. 1, the mobile communication system according to this embodiment is configured such that an X2 connection (X2'-C) is established between the radio base station eNB#1 and the radio base station eNB#10.

Further, the mobile communication system according to this embodiment is configured such that a S1 connection (S1-C) is established between the mobility management node MME and the radio base station eNB#1, and the S1 connection (S1-C) is not established between the mobility management node MME and the radio base station eNB#10.

In this case, the mobility management node MME does not recognize the radio base station eNB#10 as the existing radio base station eNB.

The mobility management node MME is configured such that S1 signaling (for example, bearer establishment signaling) destined for the radio base station eNB#10 is transmitted via the X2 connection (X2'-C).

Further, each mobile station UE is configured so as to establish an RRC connection with the radio base station eNB#1, and not to establish an RRC connection with the radio base station eNB#10.

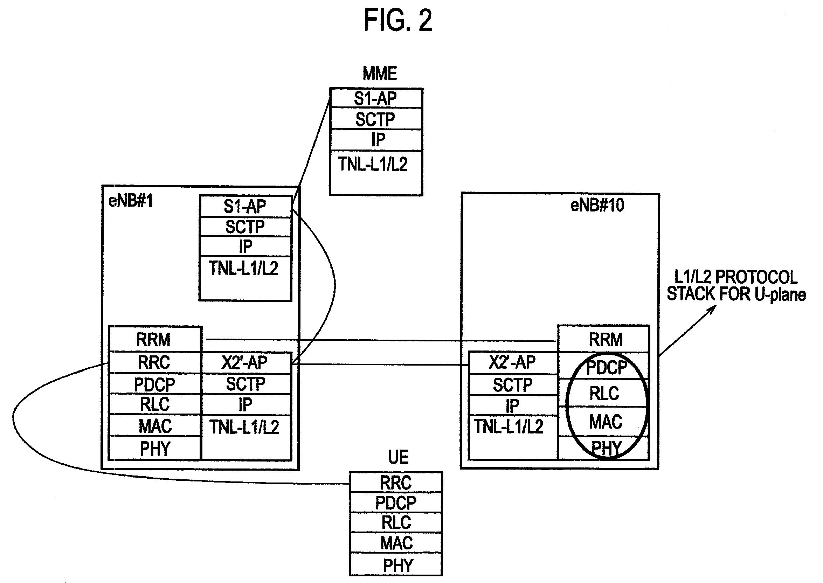

As illustrated in Fig. 2, the mobility management node MME includes, as a protocol stack, a TNL (Transport Network Layer)-L1/L2 layer function unit (layer processing unit), an IP (Internet Protocol) layer function unit as an upper layer function unit of the TNL-L1/L2 layer function unit, a SCTP (Stream Control Transmission Protocol) layer function unit as an upper layer function unit of the IP layer function unit, and a S1-AP function unit as an upper layer function unit of the SCTP layer function unit.

The radio base station eNB#1 includes, as a protocol stack on the side of the mobility management node MME, a TNL-L1/L2 layer function unit, an IP layer function unit as an upper layer function unit of the TNL-L1/L2 layer function unit, a SCTP layer function unit as an upper layer function unit of the IP layer function unit, and a S1-AP function unit as an upper function unit of the SCTP layer function unit.

Also, the radio base station eNB#1 includes, as a protocol stack on the side of the radio base station eNB#10, a TNL-L1/L2 layer function unit, an IP layer function unit as an upper layer function unit of the TNL-L1/L2 layer function unit, a SCTP layer function unit as an upper layer function unit of the IP layer function unit, and an X'2-AP (application) function unit (X'2-AP processing unit) as an upper layer function unit of the SCTP layer function unit.

Here, the X'2-AP function unit is configured to perform a processing on the X2 interface between the radio base station eNB#1 and the radio base station eNB#10.

Further, the radio base station eNB#1 includes, as a protocol stack on the side of the mobile station UE, a physical (PHY) layer function unit, a MAC (Media Access Control) layer function unit as an upper layer function unit of the physical layer function unit, an RLC (Radio Link Control) layer function unit as an upper layer function unit of the MAC layer function unit, a PDCP (Packet Data Convergence Protocol) layer function unit as an upper layer function unit of the RLC layer function unit, an RRC (Radio Resource Control) layer function unit as an upper layer function unit of the PDCP layer function unit, and an RRM (Radio Resource Management) layer function unit as an upper layer function unit of the RRC layer function unit.

The radio base station eNB#10 includes, as a protocol stack on the side of the radio base station eNB#1, a TNL-L1/L2 layer function unit, an IP layer function unit as an upper layer function unit of the TNL-L1/L2 layer function unit, a SCTP layer function unit as an upper layer function unit of the IP layer function unit, and an X'2-AP function unit as an upper layer function unit of the SCTP layer function unit.

Further, the radio base station eNB#10 includes, as a protocol stack for U-plane on the side of the mobile station UE, a physical layer function unit, a MAC layer function unit as an upper layer function unit of the physical layer function unit, an RLC layer function unit as an upper layer function unit of the MAC layer function unit, and a PDCP layer function unit as an upper layer function unit of the RLC layer function unit.

Here, the radio base station eNB#10 does not include, as a protocol stack for C-plane on the side of the mobile station UE, a physical layer function unit, a MAC layer function unit as an upper layer function unit of the physical layer function unit, an RLC layer function unit as an upper layer function unit of the MAC layer function unit, and a PDCP layer function unit as an upper layer function unit of the RLC layer function unit.

Further, the radio base station eNB#10 includes, as a protocol stack on the side of the mobile station UE, an RRM layer function unit as an upper layer function unit of the PDCP layer function unit.

The mobile station UE includes, as a protocol stack, a physical layer function unit, a MAC layer function unit as an upper layer function unit of the physical layer function unit, an RLC layer function unit as an upper layer function unit of the MAC layer function unit, a PDCP layer function unit as an upper layer function unit of the RLC layer function unit, and an RRC layer function unit as an upper layer function unit of the PDCP layer function unit.

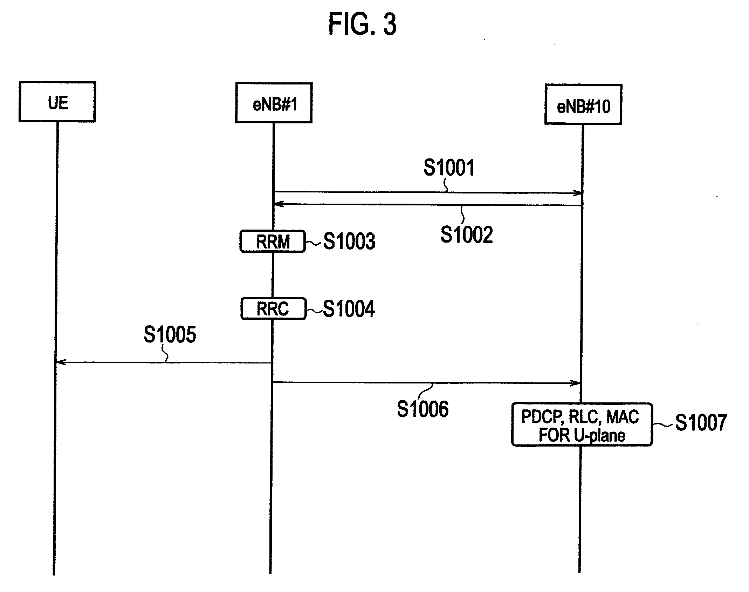

Hereinafter, operation of the mobile communication system according to this embodiment is described with reference to Fig. 3. Specifically, a radio resource allocation procedure in the mobile communication system according to this embodiment is described.

The radio resource allocation procedure is used in various cases such as, for example, establishment of the bearer and setting of "measurement".

As illustrated in Fig. 3, in steps S1001 and S1002, the radio base station eNB#1 acquires information on the resource in a small cell (for example, information indicating free resource) under the radio base station eNB#10 from the radio base station eNB#10.

Specifically, in the step S1001, the X2' -AP function unit of the radio base station eNB#1 may transmit a request signal for information on the resource to the X2' -AP function unit of the radio base station eNB#10, and in the step S1002, the X2' -AP function unit of the radio base station eNB#10 may transmit, in response to the request signal, information on the resource to the X2'-Ap function unit of the radio base station eNB#1.

Alternatively, in the step S1001, the RRM layer function unit of the radio base station eNB#1 may transmit a request signal for information on the resource to the RRM layer function unit of the radio base station eNB#10, and in the step S1002, the RRM layer function unit of the radio base station eNB#10 may transmit, in response to the request signal, information on the resource to the RRM layer function unit of the radio base station eNB#1.

Here, the radio base station eNB#1 may acquire information on the resource from the radio base station eNB#10 periodically.

In the step S1003, the radio base station eNB#1 performs resource allocation to the mobile station UE in the small cell under control based on the information on the resource.

Specifically, in the step S1003, the RRM layer function unit of the radio base station eNB#1 may perform resource allocation to the mobile station UE in the small cell under control based on the information on the resource.

In the step S1004, the radio base station eNB#1 generates an RRC message including the result of resource allocation to the mobile station UE in the small cell under control.

Specifically, in the step S1004, the RRC layer function unit of the radio base station eNB#1 may generate the RRC message including the result of resource allocation.

In the step S1005, the radio base station eNB#1 transmits the generated RRC message to the mobile station UE.

Specifically, in the step S1005, the RRC layer function unit of the radio base station eNB#1 may transmit the RRC message to the RRC layer function unit of the mobile station UE. The RRC message is, for example, "RRC Connection Reconfiguration message", and so on.

Here, the RRC layer function unit of the radio base station eNB#1 may transmit the RRC message using a regular SRB (Signaling Radio Bearer) 1.

In the step S1006, the radio base station eNB#1 notifies the result of resource allocation performed in the step S1003 to the radio base station eNB#10.

Specifically, in the step S1006, the X2'-AP function unit of the radio base station eNB#1 may notify the result of resource allocation to the X2'-AP function unit of the radio base station eNB#10 using an X2-AP message.

Alternatively, in the step S1006, the X2'-AP function unit of the radio base station eNB#1 may notify a transparent container including setting information determined based on the result of resource allocation to the X2'-AP function unit of the radio base station eNB#10.

Here, the transparent container is defined within a predetermined X2-AP message.

The step S1005 and the step S1006 may be in the reverse order.

In the step S1007, the radio base station eNB#10 performs setting of a PDCP layer function unit, an RLC layer function unit, and a MAC layer function unit for U-plane based on the result of resource allocation.

Specifically, in the step S1007, the X2'-AP function unit of the radio base station eNB#10 may perform setting of the PDCP layer function unit, the RLC layer function unit and the MAC layer function unit for U-plane based on the result of resource allocation acquired from the X2' -AP function unit of the radio base station eNB#1.

Alternatively, in the step S1007, the X2'-AP function unit of the radio base station eNB#10 may transfer the transparent container to the PDCP layer function unit, the RLC layer function unit and the MAC layer function unit for U-plane in the radio base station eNB#10, and the PDCP layer function unit, the RLC layer function unit and the MAC layer function unit for U-plane may make setting based on the setting information included in the transparent container acquired from the X2'-AP function unit.

The X2'-AP function unit may include an internal interface configured with the PDCP layer function unit, the RLC layer function unit and the MAC layer function unit.

In this case, the X2'-AP function unit may perform setting of the PDCP layer function unit, the RLC layer function unit and the MAC layer function unit based on the setting information by using the internal interface.

Aspects of this embodiment described above may be expressed as follows:

According to a feature of this embodiment, a mobile communication system includes a radio base station eNB#1 (first radio base station) configured to manage a macro cell, and a radio base station eNB#10 (second radio base station) configured to manage a small cell, wherein the radio base station eNB#1 is configured to acquire information on the resource in the small cell from the radio base station eNB#10, the radio base station eNB#1 is configured to allocate resource to a mobile station UE in the small cell based on the information on the resource, the radio base station eNB#1 is configured to generate an RRC message including a result of resource allocation to the mobile station UE in the small cell and transmit the RRC message to the mobile station UE, and the X2' -AP function unit of the radio base station eNB#1 is configured to notify the result of resource allocation to the X2' -AP function unit of the radio base station eNB#10, and wherein the radio base station eNB#10 is configured to perform setting of a PDCP layer function unit, an RLC layer function unit, and a MAC layer function unit for U-plane based on the result of resource allocation.

According to this feature, "Inter-eNB CA" may be implemented by using the radio base station eNB#1 configured to manage the macro cell, and the radio base station eNB#10 configured to manage the small cell.

According to a feature of this embodiment, the X2'-AP function unit of the radio base station eNB#1 may be configured to notify the result of resource allocation to the X2'-AP function unit of the radio base station eNB#10 by using the X2-AP message, and the X2' -AP function unit of the radio base station eNB#10 may be configured to perform setting of a PDCP layer function unit, an RLC layer function unit, and a MAC layer function unit for U-plane based on the result of resource allocation.

According to this feature, the "Inter-eNB CA" may be implemented without modifying the architecture in the existing LTE-Release 8 scheme.

According to a feature of this embodiment, the X2'-AP function unit of the radio base station eNB#1 may be configured to transmit a transparent container including setting information determined based on the result of resource allocation to the X2' -AP function unit of the radio base station eNB#10, the X2'-AP function unit of the radio base station eNB#10 may be configured to transfer the transparent container to the PDCP layer function unit, the RLC layer function unit and the MAC layer function unit for U-plane in the radio base station NB#10. Then, the PDCP layer function unit, the RLC layer function unit and the MAC layer function unit for U-plane in the radio base station eNB#10 may be configured to perform setting based on the setting information included in the transparent container acquired from the X2'-AP function unit of the radio base station eNB#10.

According to this feature, the above "Inter-eNB CA" may be implemented while reducing the processing load of the X2' -AP function unit.

According to a feature of this embodiment, the X2'-AP function unit of the radio base station eNB#10 may include an internal interface with the PDCP layer function unit, the RLC layer function unit, and the MAC layer function unit, and the X2'-AP function unit of the radio base station eNB#10 may be configured to perform setting of the PDCP layer function unit, the RLC layer function unit and the MAC layer function unit based on the result of resource allocation by using the internal interface.

### (Mobile communication system according to a second embodiment of the present invention)

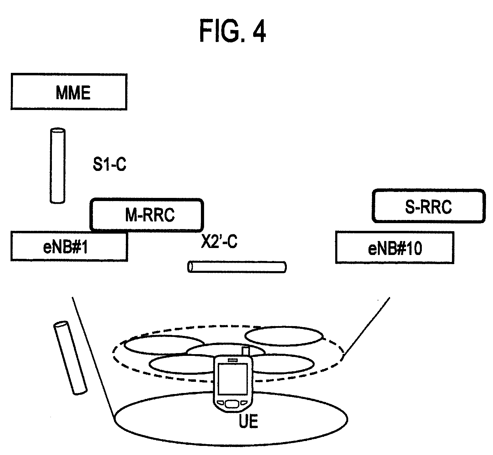

A mobile communication system according to the second embodiment of the present invention is described by focusing on differences thereof from the mobile communication system according to the first embodiment described above with reference to Fig. 4 to Fig. 6.

As illustrated in Fig. 4, the mobile communication system according to this embodiment is configured such that a S1 connection (S1-C) is established between the mobility management node MME and the radio base station eNB#1, and the S1 connection (S1-C) is not established between the mobility management node MME and the radio base station eNB#10.

Further, the mobility management node MME is configured to manage a S1 connection (S1-C) with the radio base station eNB#1 for each mobile station UE and not to manage a S1 connection (S1-C) for the radio base station eNB#10.

In this case, the mobility management node MME does not recognize the radio base station eNB#10 as the existing radio base station eNB.

The mobility management node MME is configured such that S1 signaling (for example, signaling for bearer establishment) destined for the radio base station eNB#10 is transmitted via the X2 connection (X2'-C).

Further, each mobile station is configured to establish an RRC connection with the radio base station eNB#1, and not to establish an RRC connection with the radio base station eNB#10.

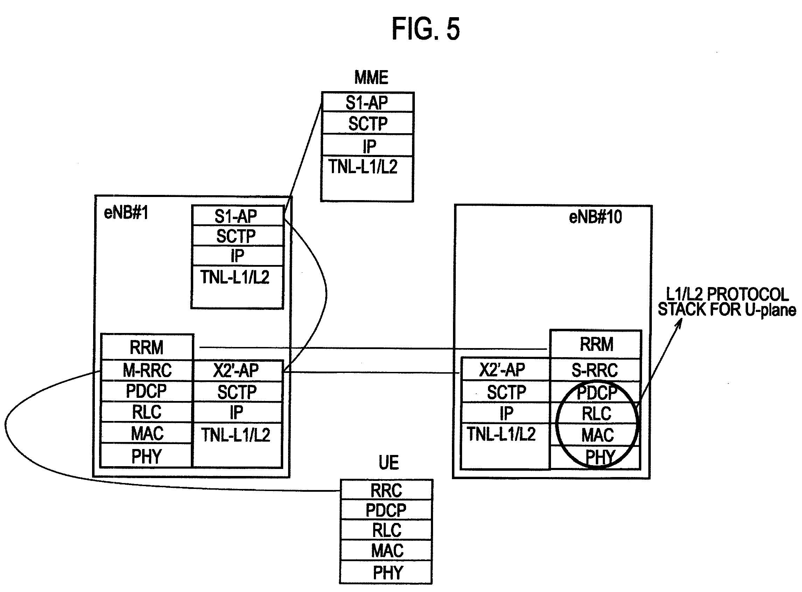

As illustrated in Fig. 5, the radio base station eNB#1 according to this embodiment includes, unlike the radio base station eNB#1 according to the first embodiment described above, a M-RRC layer function unit (RRC layer function unit for macro cell) instead of the RRC layer function unit.

Here, the M-RRC layer function unit is configured not to perform some processings of the RRC layer function unit.

The radio base station eNB#10 according to this embodiment includes, unlike the radio base station eNB#10 according to the first embodiment described above, a S-RRC layer function unit (RRC layer function unit for small cell) as an upper layer function unit of the PDCP layer function unit in the protocol stack on the side of the mobile station UE, and the RRM layer function unit is provided as an upper layer function unit of the S-RRC layer function.

Other protocol stacks are the same as the protocol stacks in the mobile communication system according to the first embodiment described above.

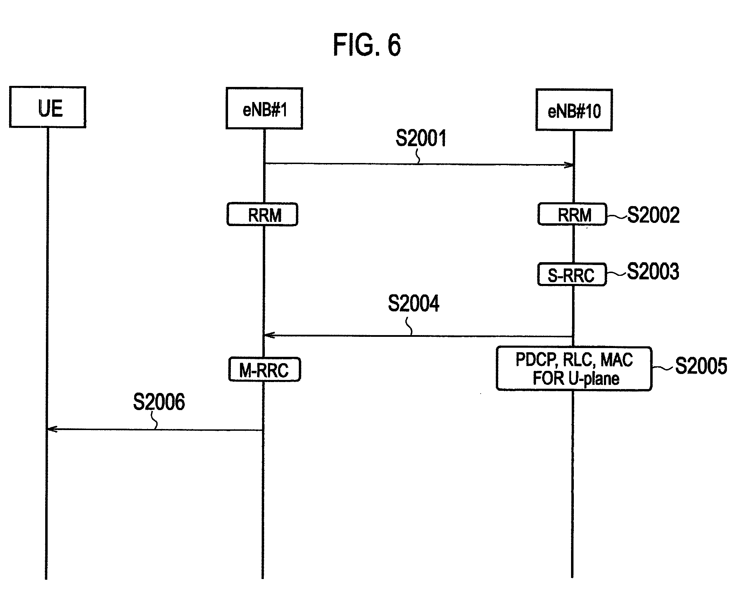

Hereinafter, operation of the mobile communication system according to this embodiment is described with reference to Fig. 6. Specifically, a radio resource allocation procedure in the mobile communication system according to this embodiment is described.

As illustrated in Fig. 6, in the step S2001, the radio base station eNB#1 notifies "UE Capability" of the mobile station UE to the radio base station eNB#10.

Specifically, in the step S2001, the RRM layer function unit of the radio base station eNB#1 may notify "UE Capability" of the mobile station UE to the RRM layer function unit of the radio base station eNB#10.

In the step S2002, the radio base station eNB#10 allocates the resource to the mobile station UE in the small cell under control.

Specifically, in the step S2002, the RRM layer function unit of the radio base station eNB#10 may perform resource allocation to the mobile station UE in the small cell under control based on "UE Capability" of the mobile station UE.

In the step S2003, the radio base station eNB#10 generates an RRC message including the result of resource allocation.

Specifically, in the step S2003, the S-RRC layer function unit of the radio base station eNB#10 may generate the RRC message including the result of resource allocation.

In the step S2004, the radio base station eNB#10 notifies RRC message to the radio base station eNB#1.

Specifically, in the step S2004, the X2'-AP function unit of the radio base station eNB#10 may transmit an X2-AP message including the RRC message as a transparent container to the X2'-AP function unit of the radio base station eNB#1.

In the step S2005, the radio base station eNB#10 performs setting of a PDCP layer function unit, an RLC layer function unit, and a MAC layer function unit for U-plane based on the result of resource allocation to the mobile station UE in the small cell under control.

Specifically, in the step S2005, the X2' -AP function unit of the radio base station eNB#10 may perform setting of the PDCP layer function unit, the RLC layer function unit and the MAC layer function unit for U-plane based on the result of resource allocation.

The X2'-AP function unit may include an internal interface with the PDCP layer function unit, the RLC layer function unit and the MAC layer function unit.

In this case, the X2'-AP function unit may perform setting of the PDCP layer function unit, the RLC layer function unit and the MAC layer function unit based on the result of resource allocation by using the internal interface.

In the step S2005, the S-RRC layer function unit of the radio base station eNB#10 may perform setting of the PDCP layer function unit, the RLC layer function unit and the MAC layer function unit for U-plane based on the result of resource allocation.

The S-RRC layer function unit may include an internal interface with the PDCP layer function unit, the RLC layer function unit and the MAC layer function unit.

In this case, the S-RRC layer function unit may perform setting of the PDCP layer function unit, the RLC layer function unit and the MAC layer function unit based on the result of resource allocation by using the internal interface.

The step S2004 and the step S2005 may be in the reverse order.

In the step S2006, the radio base station eNB#1 notifies the RRC message to the mobile station UE.

Specifically, in the step S2006, the M-RRC layer function unit of the radio base station eNB#1 may transfer the RRC message acquired by the X2' -AP function unit of the radio base station eNB#1 to the mobile station UE, as is.

Alternatively, in the step S2006, the M-RRC layer function unit of the radio base station eNB#1 may regenerate an RRC message including the result of resource allocation based on the RRC message acquired by the X2' -AP function unit of the radio base station eNB#1 and transmit to the mobile station UE.

Aspects of this embodiment described above may be described as follows:

According to a feature of this embodiment, a mobile communication system includes a radio base station eNB#1 configured to manage a macro cell, and a radio base station eNB#10 configured to manage a small cell, wherein the radio base station eNB#10 is configured to allocate the resource to the mobile station UE in the small cell, a S-RRC layer function unit of the radio base station eNB#10 is configured to perform setting of a PDCP layer function unit, an RLC layer function unit, and a MAC layer function unit for U-plane based on the result of resource allocation to the mobile station UE in the small cell, the radio base station eNB#10 is configured to generate an RRC message including the result of resource allocation, the X2' -AP function unit of the radio base station eNB#10 is configured to notify the RRC message to the X2'-AP function unit of the radio base station eNB#1, and the radio base station eNB#1 is configured to notify the RRC message to the mobile station UE.

According to this feature, "Inter-eNB CA" may be implemented by using the radio base station eNB#1 configured to manage the macro cell, and the radio base station eNB#10 configured to manage the small cell.

According to a feature of this embodiment, the radio base station eNB#1 may be configured to notify "UE Capability (capability information) " of the mobile station UE to the radio base station eNB#10, and the radio base station eNB#10 may be configured to allocate the resource based on the "UE Capability" of the mobile station UE.

According to this feature, the radio base station eNB#10 is capable of allocating the resource based on "UE Capability" of the mobile station UE in a flexible and appropriate manner.

### (Mobile communication system according to a third embodiment of the present invention)

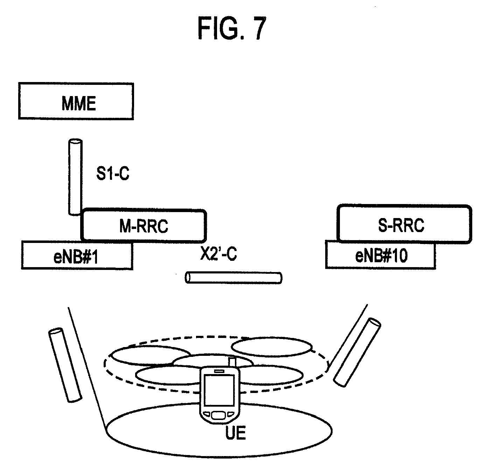

A mobile communication system according to the third embodiment of the present invention is described by focusing on differences thereof from the mobile communication system according to the first embodiment described above with reference to Fig. 7 to Fig. 9.

As illustrated in Fig. 7, the mobile communication system according to this embodiment is configured such that a S1 connection (S1-C) is established between the mobility management node MME and the radio base station eNB#1, and the S1 connection (S1-C) is not established between the mobility management node MME and the radio base station eNB#10.

Further, the mobility management node MME is configured to manage a S1 connection (S1-C) with the radio base station eNB#1 for each mobile station UE and not to manage a S1 connection (S1-C) for the radio base station eNB#10.

In this case, the mobility management node MME does not recognize the radio base station eNB#10 as the existing radio base station eNB.

The mobility management node MME is configured such that S1 signaling (for example, signaling for bearer establishment) destined for the radio base station eNB#10 is transmitted via the X2 connection (X2'-C).

Further, each mobile station is configured to establish an RRC connection with the radio base station eNB#1, and also establish an RRC connection with the radio base station eNB#10.

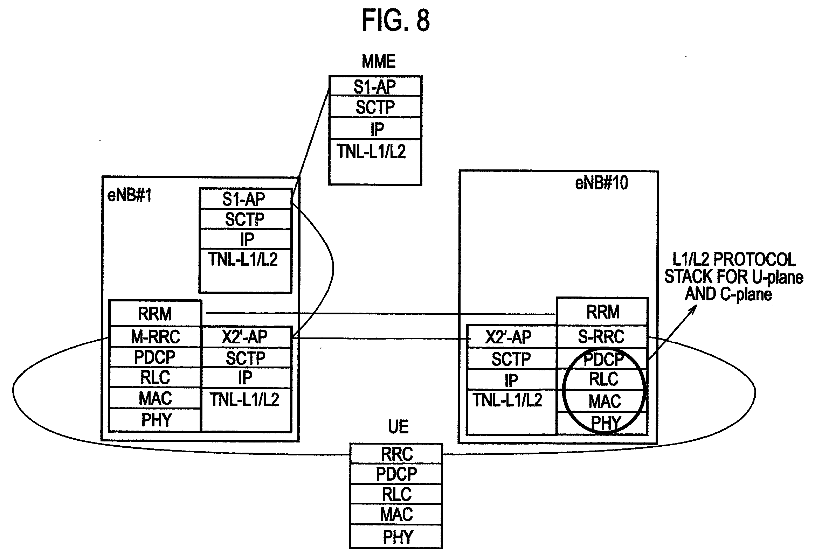

As illustrated in Fig. 8, the protocol stack in the mobile communication system according to this embodiment is the same as the protocol stack in the mobile communication system according to the second embodiment.

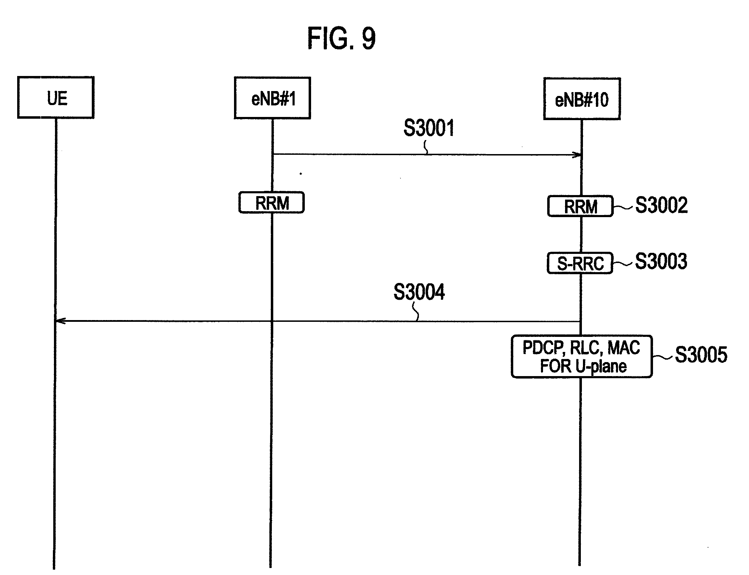

Hereinafter, operation of the mobile communication system according to this embodiment is described with reference to Fig. 9. Specifically, a radio resource allocation procedure in the mobile communication system according to this embodiment is described.

As illustrated in Fig. 9, in the step S3001, the radio base station eNB#1 notifies "UE Capability" of the mobile station UE to the radio base station eNB#10.

Specifically, in the step S3001, the RRM layer function unit of the radio base station eNB#1 may notify "UE Capability" of the mobile station UE to the layer function unit of the radio base station eNB#10.

In the step S3002, the radio base station eNB#10 allocates the resource to the mobile station UE in the small cell under control.

Specifically, in the step S3002, the RRM layer function unit of the radio base station eNB#10 may perform resource allocation to the mobile station UE in the small cell based on "UE Capability" of the mobile station UE.

In the step S3003, the radio base station eNB#10 generates an RRC message including the result of resource allocation.

Specifically, in the step S3003, the S-RRC layer function unit of the radio base station eNB#10 may generate the RRC message including the result of resource allocation.

In the step S3004, the radio base station eNB#10 notifies RRC message directly to the mobile station UE without through the radio base station eNB#1.

Specifically, in the step S3004, the S-RRC layer function unit of the radio base station eNB#1 may notify the RRC message to the RRC layer function unit of the mobile station UE.

Here, the S-RRC layer function unit of the radio base station eNB#10 may notify the RRC message to the RRC layer function unit of the mobile station UE using a newly defined SRB (for example, SRB 3).

Two SRBs are provided in the existing LTE scheme: one SRB is mapped on one PDCP layer function unit, and another SRB is mapped on one RLC layer function unit. Therefore, a new SRB is necessary to which the S-RRC layer function unit of the radio base station eNB#10 notifies the RRC message.

In the step S3005, the radio base station eNB#10 performs setting of a PDCP layer function unit, an RLC layer function unit, and a MAC layer function unit for U-plane based on the result of resource allocation to the mobile station UE in the small cell under control.

Specifically, in the step S3005, the X2'-AP function of the radio base station eNB#10 may perform setting of the PDCP layer function unit, the RLC layer function unit and the MAC layer function unit for U-plane based on the result of resource allocation.

The X2'-AP function unit may include an internal interface with the PDCP layer function unit, the RLC layer function unit and the MAC layer function unit.

In this case, the X2'-AP function unit may perform setting of the PDCP layer function unit, the RLC layer function unit and the MAC layer function unit based on the result of resource allocation by using the internal interface.

In the step S3005, the S-RRC function unit of the radio base station eNB#10 may perform setting of the PDCP layer function unit, the RLC layer function unit and the MAC layer function unit for U-plane based on the result of resource allocation.

The S-RRC layer function unit may include an internal interface with the PDCP layer function unit, the RLC layer function unit and the MAC layer function unit.

In this case, the S-RRC layer function unit may perform setting of the PDCP layer function unit, the RLC layer function unit and the MAC layer function unit based on the result of resource allocation by using the internal interface.

The step S3004 and the step S3005 may be in the reverse order.

Here, the RRC message from the radio base station eNB#10 to the mobile station UE in the step S3004 may be transmitted by either of the methods described below.

In a first method, the radio base station eNB#10 generates an RRC message and transmits the RRC message to the radio base station eNB#1 by using a transparent container, and the radio base station eNB#1 transmits the RRC message to the mobile station UE, as is.

Meanwhile, in a second method, the radio base station eNB#10 transmits "Inter node RRC message" to the radio base station eNB#1, and the radio base station eNB#1 generates an RRC message for transmitting to the mobile station UE based on "Inter node RRC message" and transmits the RRC message to the mobile station UE.

Depending on circumstances, the radio base station eNB#10 may determine whether to transmit the RRC message directly to the mobile station UE or transmit the RRC message via the radio base station eNB#1.

For example, the radio base station eNB#10 may make the above determination based on a radio condition between the radio base station eNB#1 and the mobile station UE (RSRP (Reference Signal Received Power), RSRQ (Reference Signal Received Quality), QCL (Qos Class Identifier), etc.) or based on preset configuration (OAM (Operation Administration and Maintenance).

The features of the present embodiment described above may also be expressed as follows.

A feature of the present embodiment is summarized as a mobile communication system including: a radio base station eNB#1 configured to manage a macro cell; and a radio base station eNB#10 configured to manage a small cell, in which the radio base station eNB#10 is configured to allocate resource to a mobile station UE in the small cell, an S-RRC layer function unit of the radio base station eNB#10 is configured to perform setting of a PDCP layer function unit, an RLC layer function unit, and a MAC layer function unit for U-plane based on a result of resource allocation to the mobile station UE in the small cell, the radio base station eNB#10 is configured to generate an RRC message including the result of resource allocation, the radio base station eNB#10 is configured to notify the RRC message to the mobile station UE.

According to this feature, "Inter-eNB CA" may be implemented by using the radio base station eNB#1 configured to manage the macro cell, and the radio base station eNB#10 configured to manage the small cell.

According to a feature, the radio base station eNB#1 may be configured to notify "UE Capability (capability information) " of the mobile station UE to the radio base station eNB#10, and the radio base station eNB#10 may be configured to allocate the resource based on the "UE Capability" of the mobile station UE.

According to this feature, the radio base station eNB#10 is capable of allocating the resource based on "UE Capability" of the mobile station UE in a flexible and appropriate manner.

It should be noted that the foregoing operations of the mobility management node MME, the radio base stations eNB, and the mobile station UE may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobility management node MME, the radio base stations eNB, and the mobile station UE. Otherwise, the storage medium and the processor may be provided as discrete components inside the mobility management node MME, the radio base stations eNB, and the mobile station UE.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire content of Japanese Patent Application No. 2013-135848 (filed on June 28, 2013) is incorporated by reference in the present specification.

### INDUSTRIAL APPLICABILITY

As described above, the present invention provides a mobile communication system in which the roles of a radio base station eNB managing a macro cell and a radio base station eNB managing a small cell in allocating resource to a mobile station UE in the small cell under execution of "Inter-eNB CA" using the two radio base stations eNB31/#10 are appropriately prescribed.

### EXPLANATION OF THE REFERENCE NUMERALS

- UE: mobile station
- eNB#l/eNB#10: radio base station
- MME: mobility management node

## Claims

1. A mobile communication system comprising:
a first radio base station configured to manage a macro cell; and
a second radio base station configured to manage a small cell, wherein
the first radio base station is configured to acquire information on resource in the small cell from the second radio base station,
the first radio base station is configured to allocate resource to a mobile station in the small cell based on the information on the resource,
the first radio base station is configured to generate an RRC message including a result of resource allocation to the mobile station in the small cell, and to transmit the RRC message to the mobile station,
the first radio base station is configured to notify the result of resource allocation to the second radio base station, and
the second radio base station is configured to perform setting of a PDCP layer function unit, an RLC layer function unit, and a MAC layer function unit for U-plane based on the result of resource allocation.

2. The mobile communication system according to claim 1, wherein an X2' -AP function unit of the first radio base station is configured to notify the result of resource allocation to an X2' -AP function unit of the second radio base station by using an X2-AP message, and the X2'-AP function unit of the second radio base station is configured to perform setting of the PDCP layer function unit, the RLC layer function unit, and the MAC layer function unit for U-plane based on the result of resource allocation.

3. The mobile communication system according to claim 2, wherein
the X2' -AP function unit of the second radio base station includes an internal interface with the PDCP layer function unit, the RLC layer function unit and the MAC layer function unit, and
the X2' -AP function unit of the second radio base station is configured to perform setting of the PDCP layer function unit, the RLC layer function unit, and the MAC layer function unit based on the result of resource allocation by using the internal interface.

4. The mobile communication system according to claim 1, wherein
the X2' -AP function unit of the first radio base station is configured to transmit a transparent container including setting information determined based on the result of resource allocation to the X2' -AP function unit of the second radio base station,
the X2' -AP function unit of the second radio base station is configured to transfer the transparent container to the PDCP layer function unit, the RLC layer function unit, and the MAC layer function unit for U-plane in the second radio base station, and
the PDCP layer function unit, the RLC layer function unit, and the MAC layer function unit for U-plane in the second radio base station are configured to perform setting based on the setting information included in the transparent container acquired from the X2' -AP function unit of the second radio base station.

5. A mobile communication system comprising:
a first radio base station configured to manage a macro cell; and
a second radio base station configured to manage a small cell, wherein
the second radio base station is configured to allocate resource to a mobile station in the small cell,
the second radio base station is configured to perform setting of a PDCP layer function unit, an RLC layer function unit, and a MAC layer function unit for U-plane based on a result of resource allocation to the mobile station in the small cell under control,
the second radio base station is configured to generate an RRC message including the result of resource allocation,
the second radio base station is configured to notify the RRC message to the first radio base station, and
the first radio base station is configured to notify the RRC message to the mobile station.

6. The mobile communication system according to claim 5, wherein
the first radio base station is configured to notify capability information of the mobile station to the second radio base station, and
the second radio base station is configured to allocate the resource based on the capability information of the mobile station.

7. A mobile communication system comprising:
a first radio base station configured to manage a macro cell; and
a second radio base station configured to manage a small cell, wherein
the second radio base station is configured to allocate resource to a mobile station in the small cell,
the second radio base station is configured to perform setting of a PDCP layer function unit, an RLC layer function unit, and a MAC layer function unit for U-plane based on a result of resource allocation to the mobile station in the small cell,
the second radio base station is configured to generate an RRC message including the result of resource allocation, and
the second radio base station is configured to notify the RRC message directly to the mobile station without through the first radio base station.

8. The mobile communication system according to claim 7, wherein
the first radio base station is configured to notify capability information of the mobile station to the second radio base station, and
the second radio base station is configured to allocate the resource based on the capability information of the mobile station.

9. A mobile communication system comprising:
a first radio base station configured to manage a macro cell; and
a second radio base station configured to manage a small cell, wherein
the second radio base station is configured to allocate resource to a mobile station in the small cell,
the second radio base station is configured to perform setting of a PDCP layer function unit, an RLC layer function unit, and a MAC layer function unit for U-plane based on a result of resource allocation to the mobile station in the small cell,
the second radio base station is configured to generate an RRC message including the result of resource allocation, and
the second radio base station configured to determine, based on a radio condition or preset configuration, whether to transmit the RRC message directly to the mobile station without through the first radio base station or transmit the RRC message to the mobile station via the first radio base station.

10. A mobile communication method implemented by a mobile communication system, the mobile communication system including a first radio base station configured to manage a macro cell, and a second radio base station configured to manage a small cell, the method comprising:
acquiring, by the first radio base station, information on resource in the small cell from the second radio base station, allocating resource to a mobile station in the small cell based on the information on the resource, generating an RRC message including a result of resource allocation to the mobile station in the small cell, transmitting the RRC message to the mobile station, and notifying the result of resource allocation to the second radio base station; and
performing, by the second radio base station, setting of a PDCP layer function unit, an RLC layer function unit, and a MAC layer function unit for U-plane based on the result of resource allocation.
